# NEUE EUROPÄISCHE PATENTSCHRIFT

(11) **EP 2 786 039 B2**
(45) Veröffentlichungstag und Bekanntmachung des Hinweises auf die Entscheidung über den Einspruch: **26.01.2022**
(45) Hinweis auf die Patenterteilung: 22.04.2015
(21) Anmeldenummer: 13801480.8
(22) Anmeldetag: 08.11.2013
(51) Int. Cl.: F16D 69/04

(54) **BREMSBACKE UND VERFAHREN ZUR HERSTELLUNG EINER BREMSBACKE**
BRAKE PAD AND METHOD FOR PRODUCING A BRAKE PAD
SEGMENT DE FREIN ET PROCÉDÉ DE FABRICATION D'UN SEGMENT DE FREIN

(30) Priorität: 16.11.2012 DE 102012111043
(43) Veröffentlichungstag der Anmeldung: 08.10.2014
(73) Patentinhaber: TMD Friction Services GmbH, 51381 Leverkusen (DE)
(72) Erfinder: SCHUBERT, Maik, 51371 Leverkusen (DE); SCHMITZ, Kai, 42929 Wermelskirchen (DE)
(74) Vertreter: Müller, Eckhard
(86) Internationale Anmeldenummer: PCT/EP2013/073213
(87) Internationale Veröffentlichungsnummer: WO 2014/075979

(56) Entgegenhaltungen:
- EP-B1- 0 731 288
- WO-A1-02/23060
- WO-A1-02/23060
- DE-A1- 10 257 353
- DE-A1-102004 038 804
- DE-A1-102004 038 804
- DE-B4- 19 740 597
- DE-B4- 19 740 597
- DE-B4-102008 014 550
- DE-B4-102008 014 550
- GB-A- 264 479
- GB-A- 264 479
- JP-A- S57 144 320

## Beschreibung

Die Erfindung betrifft eine Bremsbacke mit einem Belagträger und einem Reibbelag, wobei der Reibbelag mittels wenigstens einem Bolzen an dem Belagträger festgelegt ist. Dabei ist der Reibbelag bis zu einer Verschleißgrenze abnutzbar.

Bremsbacken der eingangs genannten Art sind dem Stand der Technik bekannt. Der Aufbau von Bremsbacken, insbesondere von Bremsbacken für Scheibenbremsen, ist in seiner Grundstruktur häufig ähnlich. Ein Reibbelag ist auf einem Belagträger aufgebracht. Beim Bremsen tritt der Reibbelag in reibenden Kontakt mit einer Bremsscheibe oder einer Bremstrommel und setzt dadurch kinetische Energie in Wärmeenergie um. Der Reibbelag ist in aller Regel ein Verschleißteil, er nutzt sich während des Betriebes ab. Es ist üblich, dass Reibbeläge eine definierte Verschleißgrenze haben, bis zu der die Bremsbacken benutzt werden können. Danach sollen sie ausgetauscht werden. Der Belagträger nimmt die beim Bremsen entstehenden Kräfte auf und leitet sie ab.

Aus der EP 1 567 783 B1 ist eine Scheibenbremse bekannt, insbesondere ein Bremsklotz mit einem Belagträger und einem Reibbelag, wobei dem Belagträger zum Einbinden des Reibbelags zumindest ein Bolzen aufsitzt, wobei der Bolzen ausgehend von dem Belagträger den Reibbelag von etwa der Mitte bis etwa zur Belagoberfläche durchgreift, wobei der Bolzen aus einem nicht Nichteisenmetall gebildet ist und sich der Bolzen mit dem belag im Betrieb beim Bremsreiben abschleift. Der Bolzen ist auf den Belagträger aufgeschweißt. Der Bolzen kann aus Messing hergestellt sein.

Aus der DE 94 17 974 U1 ist eine Bremsbacke bekannt, welche eine Belagträgerplatte mit einem daran angepressten Scheibenbremsbelag sowie ein auf der anderen Seite der Belagträgerplatte angebrachtes Dämpfungsblech aufweist. Das Dämpfungsblech ist zur Befestigung mit mindestens zwei Senkkopfschrauben, welche aus Messing bestehen und, jeweils durch ein Loch in der Belagträgerplatte hindurchragen, am Scheibenbremsbelag angeschraubt bzw. zur zusätzlichen Schwingungsdämpfung daran angeklebt. Das Gewinde der Schraube greift dabei in ein Sackloch im Scheibenbremsbelag ein. Die Senkkopfschraube weist im Bereich des Kopfes eine Sacklochbohrung zur Aufnahme eines Steckkontaktes für eine Verschleißanzeige auf. Dabei dient die Senkschraube als Kontakt für eine Verschleißanzeige. Die Senkkopfschraube soll so tief in die Reibmasse eindringen, dass der Kontakt zur Bremsscheibe durch Abnutzung des Reibbelags hergestellt wird, bevor die Reibmasse vollständig abgetragen ist.

Aus der DE 695 02 327 T2 ist eine Bremsbelagbaugruppe bekannt, welche eine metallische Grundplatte mit einem darauf angeordneten Reibbelag aufweist. Der Reibbelag wird an der Grundplatte mittels Nieten mechanisch befestigt. Dabei ragen die Nieten bis in etwa zur Mitte des Reibbelages hinein.

Aus der DE 10 2008 014 550 B4 ist eine Bremsbelagträgerplatte bekannt, um mit darin eingepressten Bolzen einen Bremsbelag an der Bremsbelagträgerplatte zu befestigen. Die Bremsbelagträgerplatte weist dazu mehrere Vertiefungen auf, in die die Bolzen eingreifen. Die Haltebolzen bestehen aus metallischem Material, welche die gleichen oder geringere Reibverschleißeigenschaften wie das Bremsbelagmaterial hat.

Aus der DE 197 40 597 B4 ist eine Scheibenbremse bekannt, welche aus einem Reibbelag und einem Belagträger besteht, wobei der Belagträger mittels verschiedenen Befestigungsmitteln mit dem Reibbelag verbunden ist. Zur Herstellung der Scheibenbremse wird der Reibbelag in heißem Zustand auf den Belagträger aufgepresst, wodurch die genannten Befestigungsmittel vom Reibbelag umschlossen werden und diesen dadurch formschlüssig halten.

Aus der DE 23 27 548 A ist eine Bremsbacke bekannt, wobei der Reibbelag mit Hilfe von Nieten oder Schrauben auf einem Träger auswechselbar befestigt ist. Derartige Reibbeläge können nur bis zur Niet- oder Schraubenkopfdicke abgenutzt werden.

Die EP 1 567 783 B1 offenbart eine Scheibenbremse, welche aus einem Belagträger und einem Reibbelag besteht. Die Befestigung des Reibbelags an dem Belagträger erfolgt über einen Bolzen, weicher aus einem Nichteisenmetall besteht und sich im Betrieb zusammen mit dem Reibbelag beim Bremsen abschleift.

WO 02/23060 A1 beschreibt eine Bremsbacke mit einem Reibbelag für eine Trommelbremse. Der Reibbelag weist auf seiner Oberfläche eine oder mehrere Nuten auf. Die Bremsbacke kann in einem gekühlten Trommelbremssystem eingesetzt werden, bei dem die Kühlung durch Lüftungsöffnungen in der Trommel erfolgt.

DE 10 2004 038 804 A1 offenbart eine Kupplungsscheibe, an der direkt oder indirekt über ein Trägerelement ein Reibbelag angeordnet ist. Der Reibbelag ist über ein Befestigungselement in Form einer Passhülse, die sich in eine Bohrung in der Kupplungsscheibe erstreckt, mit dieser verbunden. Der Presssitz in der Kupplungsschreibe wird durch ein Werkzeug mit kegelstumpfartigem Endabschnitt erzeugt, das in das Innere der Passhülse eingeschoben wird.

GB 264,479 betrifft einen Reibbelag der auf eine Trägerplatte, die als Zwischenträger dient, geklebt ist. Zum einfachen Wechsel des Reibbelages ist dieser Zwischenträger mit dem eigentlichen Trägerelement über Nieten, Schrauben oder Bolzen verbunden.

Nachteilig bei dem Stand der Technik ist, dass einerseits die Herstellung der Scheibenbremse vergleichsweise aufwendig ist und andererseits der Bolzen das Bremsverhalten sowie die Geräuschkulisse beeinflusst. Die Abstimmung einer entsprechenden Scheibenbremse ist wesentlich schwieriger und nur in engeren Grenzen möglich als bei Bremsbacken, bei denen die Materialwahl vollständig frei ist.

Aufgabe der Erfindung ist es somit, eine Bremsbacke der eingangs genannten Art dahingehend weiter zu bilden, dass sie einfach herstellbar und besser abzustimmen ist.

Die Aufgabe wird gelöst durch eine Bremsbacke gemäß Anspruch 1 sowie durch ein Verfahren zur Herstellung einer Bremsbacke gemäß dem nebengeordneten Anspruch 9. Weitere Ausgestaltungen der Erfindung sind Gegenstand der Unteransprüche.

Eine erfindungsgemäße Bremsbacke weist einen Belagträger und einen Reibbelag auf, wobei der Reibbelag mittels wenigstens einem Bolzen an dem Belagträger festgelegt ist. Der wenigstens eine Bolzen ermöglicht eine gute Krafteinleitung von dem Reibbelag in den Belagträger. Durch den Bolzen sind Scherkräfte zwischen Reibbelag und Belagträger im Bereich ihrer Verbindung reduziert, da diese über den wenigstens einen Bolzen abgeleitet werden.

Der Reibbelag ist bis zu einer Verschleißgrenze abnutzbar, die von dem konkreten Einsatzzweck abhängig ist und die im ordnungsgemäßen Betrieb nicht unterschritten werden darf.

Erfindungsgemäß ist vorgesehen, dass der Bolzen bis unterhalb oder bis zu der Verschleißgrenze in den Reibbelag hineinragt, so dass der wenigstens eine Bolzen zumindest bei nicht bis zur Verschleißgrenze abgenutztem Reibbelag unterhalb einer Reibfläche des Reibbelags liegt. Auf diese Weise wird verhindert, dass der Bolzen im regulären Betrieb mit dem Reibpartner der Bremsbacke, beispielsweise einer Bremsscheibe oder einer Bremstrommel, in Berührung kommt. Mithilfe der Erfindung wird erreicht, dass stets nur der Reibbelag selbst mit dem entsprechenden Reibpartner wechselwirkt, was die Auslegung des Reibbelages hinsichtlich Geräuschentwicklung und Bremsverhalten vereinfacht.

Wenn der Bolzen bis zur Verschleißgrenze ragt, ist es weiterhin möglich, das sich mit dem beim Erreichen der Verschleißgrenze eintretenden plötzlichen Wechselwirken zwischen Bolzen und Reibpartner verändernde Brems- und/oder Geräuschverhalten als Verschleißindikator zu nutzen.

Gemäß der Erfindung ist vorgesehen, dass der Belagträger aus einem ersten Material und der wenigstens eine Bolzen aus einem zweiten Material besteht, wobei das zweite Material weicher ist als das erste Material, also das erste Material härter ist als das zweite Material. Somit weist der wenigstens eine Bolzen ein Übermaß auf und verformt sich beim Verpressen derart, dass der Bolzen in dem Belagträger form- und kraftschlüssig festgelegt ist. Diese Methode erspart gegenüber einem Festschweißen Arbeitsschritte und Energie, sodass die Methode kostengünstiger durchführbar ist als Schweißmethoden.

Gemäß der Erfindung ist vorgesehen, dass der wenigstens eine Bolzen von der Oberseite der Belagträgerplatte in den Belagträger eingepresst ist. Somit wird erreicht, dass die entstehende Verbindung den hohen Temperaturen und hohen Belastungen Stand hält.

Gemäß der Erfindung ist vorgesehen, dass das zweite Material eine geringere Festigkeit als das erste Material aufweist. Dies erleichtert das Eintreiben der Bolzen in den Belagträger.

Gemäß der Erfindung ist vorgesehen, dass der Belagträger wenigstens eine Durchgangsausnehmung zur Aufnahme des wenigstens einen Bolzens aufweist, wobei die Durchgangsausnehmung eine geringe lichte Weite aufweist als der wenigstens eine Bolzen. Auf diese Weise wird der wenigstens eine Bolzen beim Verpressen in die wenigstens eine Durchgangsausnehmung unter Verformung eingetrieben.

Gemäß einer weiteren möglichen Ausgestaltung der Erfindung kann vorgesehen sein, dass der Reibbelag wenigstens einen Rücksprung oder eine Durchgangsausnehmung zur Aufnahme des wenigstens einen Bolzens hat. Dieser erleichtert das Einbringen des wenigstens einen Bolzens in den Reibbelag.

Gemäß einer weiteren möglichen Ausgestaltung der Erfindung kann zwischen Belagträger und Reibbelag eine Zwischenschicht vorgesehen sein. Die Zwischenschicht dient zur Dämpfung zwischen Belagträger und Reibbelag und somit der Geräuschoptimierung beim Bremsen.

Gemäß einer weiteren möglichen Ausgestaltung der Erfindung kann der wenigstens eine Bolzen einen Kopf aufweisen, der auf der dem Reibbelag abgewandten Seite des Belagträgers angeordnet ist. Der Bolzen wird also gemäß dieser Ausgestaltung rückseitig in den Belagträger eingetrieben und durchgreift diesen vollständig, wodurch ein fester Sitz des wenigstens einen Bolzens in dem Belagträger sichergestellt ist.

Gemäß einer weiteren möglichen Ausgestaltung der Erfindung kann auf der dem Belagträger abgewandten Seite ein Dämpfungsblech angeordnet sein.

Gemäß einer denkbaren Ausgestaltung kann der Bolzen dabei in den Belagträger und das Dämpfungsblech eingepresst sein, wodurch das Dämpfungsblech am Belagträger fixiert wird und die Funktion des Dämpfungsbleches nicht beeinträchtigt ist.

Gemäß einer alternativen Ausgestaltung kann der Bolzen über die dem Reibbelag abgewandten Seite des Belagträgers hinausstehen. Damit bildet der Bolzen einen Ankerpunkt für das Dämpfungsblech.

Ein erster unabhängiger Gegenstand der Erfindung betrifft ein Verfahren zur Herstellung einer Bremsbacke, wobei das Verfahren die folgenden Verfahrensschritte aufweist:
- Bereithalten eines Belagträgers und wenigstens eines Bolzens;
- Bereithalten von Reibmaterial und/oder Zwischenschicht und/oder Reibbelag mit oder ohne Zwischenschicht;
- Positionieren des wenigstens einen Bolzens relativ zum Belagträger,
- Positionieren der Belagträgerplatte relativ zum Reibmaterial und oder Zwischenschicht und oder Reibbelag mit oder ohne Zwischenschicht sowie
- Verpressen der wenigstens einen Bolzen mit der Belagträgerplatte sowie
- Verpressen der Belagträgerplatte mit dem Reibmaterial und oder Zwischenschicht und oder Reibbelag mit oder ohne Zwischenschicht

Die vorletzten beiden Schritte können in ihrer Reihenfolge auch vertauscht sein, so dass das Verpressen des wenigstens einen Bolzens zeitlich vor dem Positionieren des Belagträger relativ zum Reibmaterial und oder Zwischenschicht und oder Reibbelag mit oder ohne Zwischenschicht vorgenommen wird.

Gemäß dem erfindungsgemäßen Verfahren ist vorgesehen, dass der wenigstens eine Bolzen vor der Positionierung des Reibbelags relativ zur Belagträgerplatte in einer Durchgangsausnehmung des Belagträgers eingesetzt wird.

Gemäß einer ersten möglichen weiteren Ausgestaltung des erfindungsgemäßen Verfahrens kann vorgesehen sein, dass das Verpressen mit einem Pressstempel durchgeführt wird, der einen Vorsprung aufweist und wobei der Bolzen mittels des Vorsprungs verpresst wird. Die Verpressung kann kraft- und/oder weggesteuert sein. Bei einer Wegsteuerung kann der Bolzen in eine vorgegebene Tiefe in die Belagträgerplatte eingepresst werden.

Das erfindungsgemäße Verfahren wird zur Herstellung einer Bremsbacke gemäß dem zuvor beschriebenen Erfindungsgedanken gemäß einem der Ansprüche 1 bis 8 durchgeführt.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. In dem Ausführungsbeispiel zeigen schematisch:

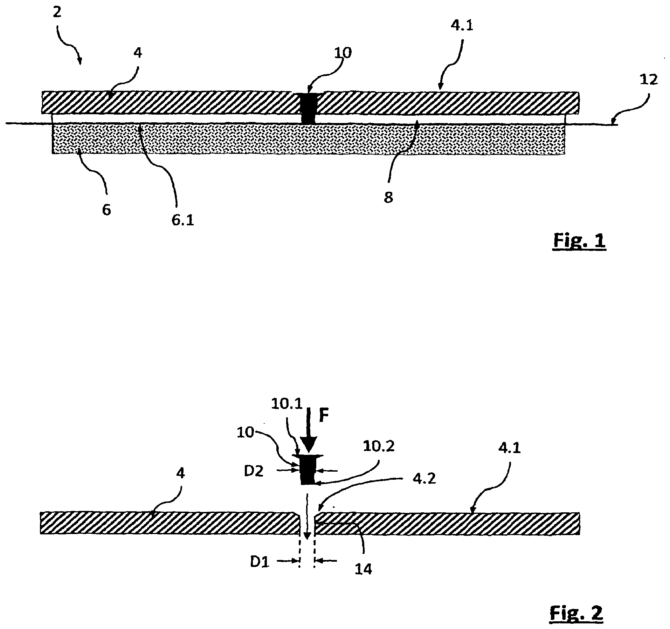

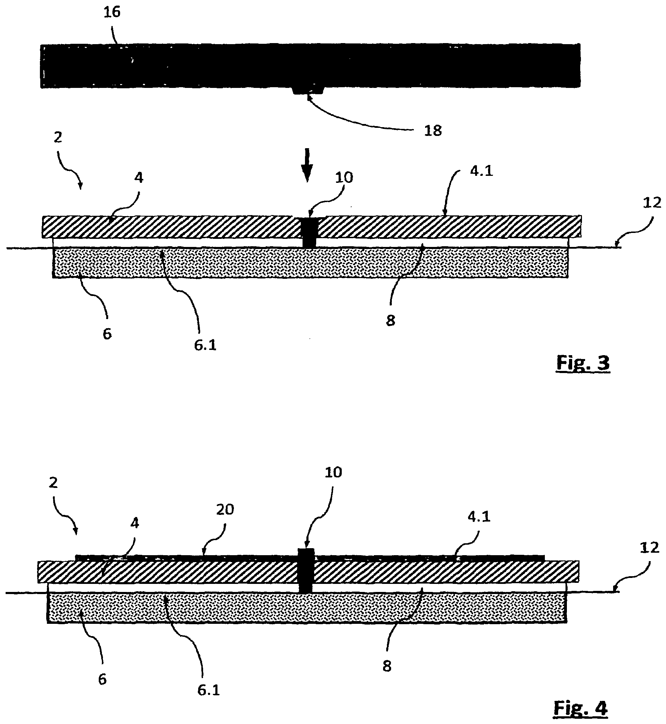

## Patentansprüche

1. Bremsbacke, mit einem Belagträger (4) mit einer Oberseite (4.1) und einem Reibbelag (6), welcher mittels wenigstens einem Bolzen (10) an dem Belagträger (4) festgelegt ist, wobei der Bolzen (10) ein vom Belagträger (4) separates Teil darstellt, wobei der Belagträger (4) aus einem ersten Material besteht und der wenigstens eine Bolzen (10) aus einem zweiten Material, wobei das zweite Material weicher ist als das erste Material, und wobei der Reibbelag (6) bis zu einer Verschleißgrenze (12) abnutzbar ist, wobei der Bolzen (10) bis unterhalb der Verschleißgrenze (12) in den Reibbelag (6) hineinragt, sodass der wenigstens eine Bolzen (10) zumindest bei nicht vollständig abgenutztem Reibbelag (6) unterhalb einer Reibfläche (6.1) des Reibbelags (6) bleibt, **dadurch gekennzeichnet, dass** der Belagträger (4) wenigstens eine Durchgangsausnehmung (14) zur Aufnahme des wenigstens einen Bolzens (10) aufweist, die eine geringere lichte Weite aufweist als der wenigstens eine Bolzen (10), und dass der wenigstens eine Bolzen (10) von der dem Reibbelag (6) abgewandten Oberseite (4.1) der Belagträgerplatte aus unter Verformung des Bolzens (10) in den Belagträger (4) eingepresst ist, wobei der Bolzen (10) vor dem Einpressen ein Übermass gegenüber der Durchgangsausnehmung (14) aufweist, so dass sich der Bolzen (10) beim Einpressen derart verformt, dass er in dem Belagträger form- und kraftschlüssig festgelegt ist.

2. Bremsbacke nach Anspruch 1, **dadurch gekennzeichnet, dass** das zweite Material eine geringere Scherfestigkeit aufweist als das erste Material.

3. Bremsbacke nach einem der vorangegangenen Ansprüche, **dadurch gekennzeichnet, dass** der Reibbelag (6) wenigstens einen Rücksprung oder eine Durchgangsausnehmung zur Aufnahme des wenigstens einen Bolzen (10) hat.

4. Bremsbacke nach einem der vorangegangenen Ansprüche, **dadurch gekennzeichnet, dass** zwischen Belagträger (4) und Reibbelag (6) eine Zwischenschicht (8) vorgesehen ist.

5. Bremsbacke nach einem der vorangegangenen Ansprüche, **dadurch gekennzeichnet, dass** der Bolzen (10) einen Kopf (10.1) aufweist, wobei der Kopf (10.1) des wenigstens einen Bolzen (10) auf der dem Reibbelag (6) abgewandten Seite (4.1) des Belagträgers (4) angeordnet ist.

6. Bremsbacke nach einem der vorangegangenen Ansprüche, **dadurch gekennzeichnet, dass** auf der dem Belagträger (4) abgewandten Seite ein Dämpfungsblech (20) angeordnet ist.

7. Bremsbacke nach Anspruch 6, **dadurch gekennzeichnet, dass** der Bolzen (10) in den Belagträger (4) und das Dämpfungsblech (20) eingepresst ist.

8. Bremsbacke nach einem der vorhergehenden Ansprüche, **dadurch gekennzeichnet, dass** der Bolzen (10) über die dem Reibbelag (6) abgewandte Seite des Belagträgers (4) hinaussteht.

9. Verfahren zur Herstellung einer Bremsbacke (2) nach einem der Ansprüche 1 bis 8, mit folgenden Verfahrensschritten:
- Bereithalten eines Belagträgers (4) und wenigstens einem Bolzen (10);
- Bereithalten von Reibmaterial mit oder ohne Zwischenschicht;
- Positionieren des Belagträgers (4) relativ zum Reibmaterial mit oder ohne Zwischenschicht;
- Positionieren des wenigstens einen Bolzens (10) relativ zum Belagträger (4);
- Verpressen des wenigstens einen Bolzen (10) mit dem Belagträger (4);
- Verpressen des Belagträgers (4) mit wenigstens einem Bolzen (10) mit dem Reibmaterial mit oder ohne Zwischenschicht.

10. Verfahren nach Anspruch 9, wobei der wenigstens eine Bolzen (10) vor dem Verpressen des Reibmaterials (6) mit oder ohne Zwischenschicht (8) in eine Durchgangsausnehmung des Belagträger (4) eingesetzt wird.

11. Verfahren nach Anspruch 9 oder 10, wobei das Verpressen mit einem Pressstempel (16) durchgeführt wird, der einen Vorsprung (18) aufweist und wobei der Bolzen (10) mittels des Vorsprungs (18) verpresst wird.

## Claims

1. Brake shoe, having a lining carrier (4) with an upper side (4.1) and a friction lining (6) which is fixed to the lining carrier (4) by means of at least one pin (10), the pin (10) being a part separate from the lining carrier (4), the lining carrier (4) being composed of a first material and the at least one pin (10) being composed of a second material, the second material being softer than the first material, and it being possible for the friction lining (6) to be worn as far as a wear limit (12), the pin (10) protruding into the friction lining (6) as far as below the wear limit (12), with the result that the at least one pin (10) remains below a friction face (6.1) of the friction lining (6) at least in the case of a friction lining (6) which is not completely worn, **characterized in that** the lining carrier (4) has at least one through recess (14) for receiving the at least one pin (10), which through recess (14) has a smaller inside width than the at least one pin (10), and **in that** the at least one pin (10) is pressed, with deformation of the at least one pin (10), into the lining carrier (4) from the upper side (4.1), which faces away from the friction lining (6), of the lining carrier plate, the pin (10) having an oversize in relation to the through recess (14) before being pressed in, such that the pin (10), as it is pressed in, deforms such that it is fixed in form-fitting and force-fitting fashion in the lining carrier.

2. Brake shoe according to Claim 1, **characterized in that** the second material has a lower shear strength than the first material.

3. Brake shoe according to one of the preceding claims, **characterized in that** the friction lining (6) has at least one indentation or a through recess for receiving the at least one pin (10).

4. Brake shoe according to one of the preceding claims, **characterized in that** an intermediate layer (8) is provided between the lining carrier (4) and the friction lining (6).

5. Brake shoe according to one of the preceding claims, **characterized in that** the pin (10) has a head (10.1), the head (10.1) of the at least one pin (10) being arranged on that side (4.1) of the lining carrier (4) which faces away from the friction lining (6).

6. Brake shoe according to one of the preceding claims, **characterized in that** a damping plate (20) is arranged on the side which faces away from the lining carrier (4).

7. Brake shoe according to Claim 6, **characterized in that** the pin (10) is pressed into the lining carrier (4) and the damping plate (20).

8. Brake shoe according to one of the preceding claims, **characterized in that** the pin (10) protrudes beyond that side of the lining carrier (4) which faces away from the friction lining (6).

9. Method for producing a brake shoe (2) according to one of Claims 1 to 8, having the following method steps:
- provision of a lining carrier (4) and at least one pin (10);
- provision of friction material with or without an intermediate layer;
- positioning of the lining carrier (4) relative to the friction material with or without an intermediate layer;
- positioning of the at least one pin (10) relative to the lining carrier (4);
- pressing of the at least one pin (10) with the lining carrier (4);
- pressing of the lining carrier (4) having at least one pin (10) with the friction material with or without an intermediate layer.

10. Method according to Claim 9, the at least one pin (10) being inserted into a though recess of the lining carrier (4) before the pressing of the friction material (6) with or without an intermediate layer (8).

11. Method according to Claim 9 or 10, the pressing being carried out by way of a punch (16) which has a projection (18), and the pin (10) being pressed by means of the projection (18).

## Revendications

1. Segment de frein, avec un support de garniture (4) doté d'un côté supérieur (4.1) et d'une garniture de friction (6) fixée au support de garniture (4) à l'aide d'au moins un boulon (10), le boulon (10) représentant une pièce distincte du support de garniture (4), le support de garniture (4) se composant d'un premier matériau et l'au moins un boulon (10) se composant d'un deuxième matériau, le deuxième matériau étant plus souple que le premier matériau, et la garniture de friction (6) pouvant être utilisée jusqu'à une limite d'usure (12), le boulon (10) rentrant dans la garniture de friction (6) jusqu'en dessous de la limite d'usure (12), de sorte que l'au moins un boulon (10) reste en dessous d'une surface de friction (6.1) de la garniture de friction (6) au moins en présence d'une garniture de friction (6) non entièrement usée, **caractérisé en ce que** le support de garniture (4) comporte au moins un retrait ou au moins un creux passant (14) permettant de loger l'au moins un boulon (10), ledit creux présentant une largeur intérieure plus réduite que l'au moins un boulon (10), et **en ce que** l'au moins un boulon (10), avec une déformation de l'au moins un boulon (10), est comprimé dans le support de garniture (4) depuis le côté supérieur (4.1) opposé à la garniture de friction (6) de la plaque de support de garniture, le boulon (10) présentant avant la compression une surcote par rapport au creux passant (14) , de sorte que le boulon (10) se déforme lors de la compression de telle sorte qu'il est fixé par correspondance de formes et par la force dans le support de garniture.

2. Segment de frein selon la revendication 1, **caractérisé en ce que** le deuxième matériau présente une résistance au cisaillement plus réduite que le premier matériau.

3. Segment de frein selon l'une quelconque des revendications précédentes, **caractérisé en ce que** la garniture de friction (6) a au moins un retrait ou un creux passant permettant de recevoir l'au moins un boulon (10).

4. Segment de frein selon l'une quelconque des revendications précédentes, **caractérisé en ce qu'**une couche intermédiaire (8) est prévue entre le support de garniture (4) et la garniture de friction (6).

5. Segment de frein selon l'une quelconque des revendications précédentes, **caractérisé en ce que** le boulon (10) comporte une tête (10.1), la tête (10.1) de l'au moins un boulon (10) étant disposée sur le côté du support de garniture (4) opposé (4.1) à la garniture de friction (6).

6. Segment de frein selon l'une quelconque des revendications précédentes, **caractérisé en ce qu'**une tôle d'amortissement (20) est disposée sur le côté opposé au support de garniture (4).

7. Segment de frein selon la revendication 6, **caractérisé en ce que** le boulon (10) est comprimé dans le support de garniture (4) et la tôle d'amortissement (20).

8. Segment de frein selon l'une quelconque des revendications précédentes, **caractérisé en ce que** le boulon (10) ressort vers l'extérieur au-delà du côté du support de garniture (4) opposé à la garniture de friction (6).

9. Procédé de fabrication d'un segment de frein (2) selon l'une quelconque des revendications 1 à 8, avec les étapes de procédé suivantes :
- préparation d'un support de garniture (4) et d'au moins un boulon (10) ;
- préparation d'un matériau de friction avec ou sans couche intermédiaire ;
- positionnement du support de garniture (4) par rapport au matériau de friction avec ou sans couche intermédiaire ;
- positionnement de l'au moins un boulon (10) par rapport au support de garniture (4) ;
- compression de l'au moins un boulon (10) avec le support de garniture (4) ;
- compression du support de garniture (4) doté d'au moins un boulon (10) avec le matériau de friction, avec ou sans couche intermédiaire.

10. Procédé selon la revendication 9, l'au moins un boulon (10) étant inséré dans un creux passant du support de garniture (4) avant la compression du matériau de friction (6) avec ou sans couche intermédiaire (8).

11. Procédé selon la revendication 9 ou 10, la compression étant réalisée à l'aide d'un poinçon (16) comportant une saillie (18) et le boulon (10) étant comprimé à l'aide de la saillie (18).
